(19) Europäisches Patentamt
European Patent Office
Office européen des brevets

(11) **EP 2 978 115 A1**

(12) **EUROPEAN PATENT APPLICATION**

(43) Date of publication:
**27.01.2016 Bulletin 2016/04**

(51) Int Cl.:
*H02M 1/12* (2006.01)          *H02M 7/5387* (2007.01)
*H02P 27/06* (2006.01)          *H02M 1/44* (2007.01)

(21) Application number: **15173090.0**

(22) Date of filing: **22.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.07.2014   US 201414338077**

(71) Applicant: **Hamilton Sundstrand Corporation Charlotte, NC 28217 (US)**

(72) Inventor: **WHITE, Adam M.
Belvidere, IL 61008 (US)**

(74) Representative: **Iceton, Greg James
Dehns
St Bride's House
10 Salisbury Square
London EC4Y 8JD (GB)**

(54) **COMMON MODE SUPPRESSION BY DRIVING OPEN-WINDING MOTOR WITH H-BRIDGES AND BIPOLAR MODULATION**

(57)    An electrical system (100) includes a converter having an H-bridge (114). The H-bridge (114) includes a first set of transistors (116) electrically connected in series and a second set of transistors (118) electrically connected in series. The first set and the second set of transistors (116, 118) are electrically connected in parallel. The H-bridge (114) defines three available switching states such that a common mode voltage across the H-bridge (114) at each switching state is zero. A method for reducing electromagnetic interference (EMI) in pulse-width modulation (PWM) converters includes diagonally switching transistors of the H-bridge (114). Diagonally switching the transistors of the H-bridge (114) includes constraining available switching states of the H-bridge (114) to only include the switching states with zero common-mode voltage such that common-mode voltage on an AC output side of the H-bridge (114) is zero.

FIG. 2

**Description**

**BACKGROUND OF THE INVENTION**

**1. Field of the Invention**

The subject invention relates to power converters and more particularly, to inverters, for example, inverters used in aircraft motor drive systems.

**2. Description of Related Art**

Traditional pulse width modulation (PWM) converters a generate pulses of common mode voltage at their inputs and/or outputs, causing unwanted electrical signals known as electromagnetic interference (EMI). In general, unwanted EMI caused by common mode voltage can be dealt with by adding common mode filters to the converter inputs or outputs. Common mode filters tend to be heavy.

There are EMI elimination techniques that claim to eliminate common mode voltage, potentially removing the need for an EMI filter all together. These traditional techniques, however, do not truly eliminate common mode voltage. Instead, during the "dead time" or "blanking time" of the converter, e.g. when neither of the series connected transistors of a converter leg are conducting, pulses of common mode voltage are still generated. Consequently, even these traditional EMI elimination designs require a common mode filter (and the associated weight penalty) for aerospace applications.

While traditional techniques are satisfactory for their intended purpose, continued developments toward the more electric vehicle have led to a need for improved power converters. The present invention provides a solution for this need.

**SUMMARY OF THE INVENTION**

An electrical system includes a converter having an H-bridge. The H-bridge includes a first set of transistors electrically connected in series and a second set of transistors electrically connected in series. The second set of transistors is electrically connected in parallel with the first set of transistors. The H-bridge defines three available switching states such that a common mode voltage across the H-bridge at each switching state is zero.

Each of the first set of transistors and the second set of transistors can include respective first and second transistors. In a first state of the three available switching states a first transistor in the first set of transistors can be switched on, a second transistor in the first set of transistors can be switched off, a first transistor in the second set of transistors can be switched off, and a second transistor in the second set of transistors can be switched on. In a second state of the three available switching states the first transistor in the first set of transistors can be switched off, the second transistor in the first set of transistors can be switched on, the first transistor in the second set of transistors can be switched on, and the second transistor in the second set of transistors can be switched off. In an off state of the three available switching states the first and second transistors in the first set of transistors can be switched off, and the first and second transistors in the second set of transistors can be switched off.

It is contemplated that the electrical system can include a controller operatively connected to the converter for directing the H-bridge to switch between the three available switching states. The controller can be configured to direct the H-bridge to switch from the off state to the first state, from the first state to the off state, from the off state to the second state, and/or from the second state to the off state.

In another aspect, the electrical system can include an open winding motor. The open winding motor can have isolated AC phase windings. Each of the first set of transistors and the second set of transistors can include a respective AC link terminal, wherein both AC link terminals can be electrically connected to the isolated AC phase winding of the open winding motor. It is contemplated that the converter can include two additional H-bridges, similar to the H-bridge described above, to form a six-leg converter. The open winding motor can be a three-phase open winding motor, wherein each phase of the open winding motor can correspond to one of the respective H-bridges through respective AC link terminals.

The electrical system can include a generator and a rectifier. The rectifier can be electrically connected to the generator for converting alternating current energy from the generator to direct current energy. The converter can be electrically connected to the rectifier through a two-wire DC bus for converting direct current energy from the rectifier to alternating current energy.

A method for reducing electromagnetic interference (EMI) in pulse-width modulation (PWM) converters includes diagonally switching transistors of an H-bridge. Diagonally switching the transistors of the H-bridge includes constraining available switching states of the H-bridge to only include the switching states with zero common-mode voltage such that common-mode voltage on an AC output side of the H-bridge is zero.

The AC output side of the H-bridge can include two AC terminals. Each AC terminal can be electrically connected to a single phase of a three-phase open winding motor. Diagonally switching the transistors of the H-bridge can include directing the transistors of the H-bridge with a controller to switch between three available switching states, as described above. Directing the H-bridge with the controller to switch between three available switching states can include directing the transistors to switch from the off state to the first state, from the first state to the off state, from the off state to the second state, and/or from the second state to the off state.

These and other features of the systems and methods of the subject invention will become more readily apparent to those skilled in the art from the following detailed description of the preferred embodiments taken in conjunction with the drawings.

## BRIEF DESCRIPTION OF THE DRAWINGS

So that those skilled in the art will readily understand how to make and use the methods and devices disclosed herein without undue experimentation, the methods and devices will be described by way of example and in detail herein below with reference to certain figures, wherein:

Fig. 1 is a schematic diagram of an exemplary embodiment of a motor drive system constructed in accordance with the present disclosure, showing a three-phase, six wire motor;
Fig. 2 is a schematic diagram of the motor drive system of Fig. 1, showing a plurality of H-bridges electrically connected to respective phases of a three-phase motor; and
Fig. 3 is a schematic diagram of an exemplary method for reducing EMI in PWM inverters in accordance with the invention, showing operations for switching an H-bridge between three available switching states.

## DETAILED DESCRIPTION OF THE PREFERRED EMBODIMENTS

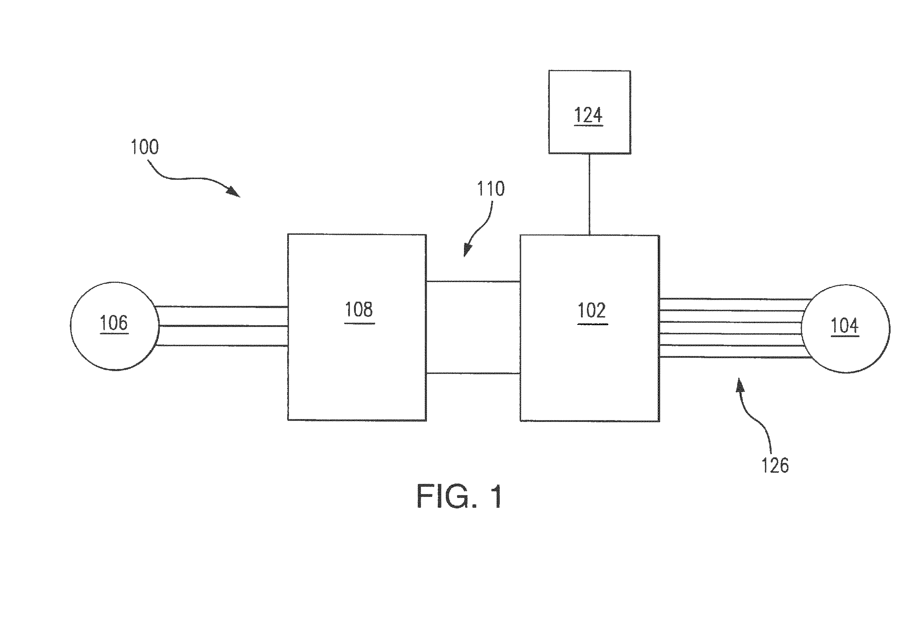

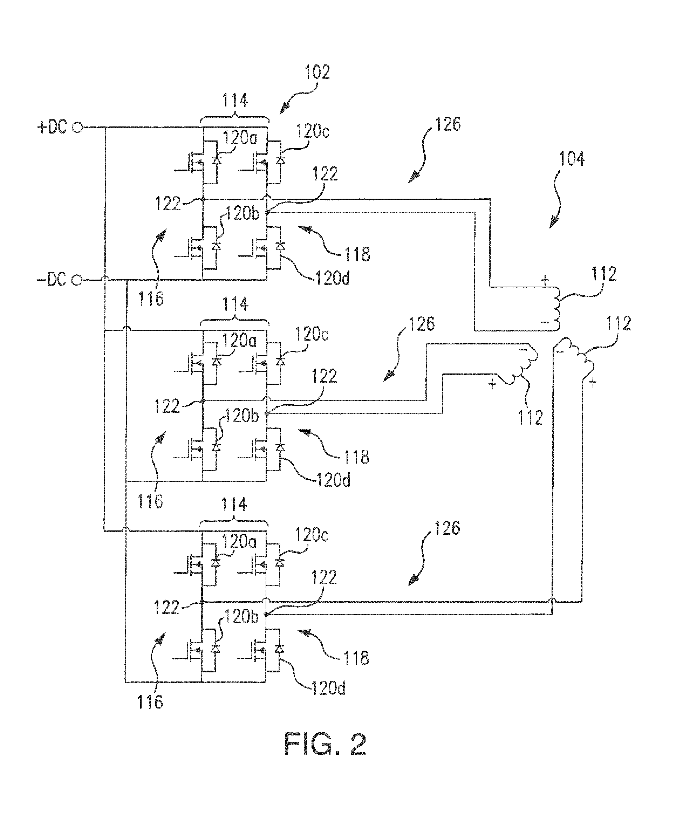

Reference will now be made to the drawings wherein like reference numerals identify similar structural features or aspects of the subject disclosure. For purposes of explanation and illustration, and not limitation, a schematic diagram of an exemplary embodiment of the power converter in accordance with the disclosure is shown in Fig. 1 and is designated generally by reference character 100. Other embodiments of power converters in accordance with the disclosure, or aspects thereof, are provided in Figs. 2-3, as will be described.

As shown in Fig. 1, an electrical system 100, e.g. a motor drive system, includes a converter, e.g. an inverter 102, an open winding motor 104, a generator 106 and a rectifier 108. Rectifier 108 is electrically connected to generator 106 for converting alternating current energy from the generator to direct current energy. Inverter 102 is electrically connected to rectifier 108 through a two-wire DC bus 110 for converting direct current energy from the rectifier to alternating current energy. While the converter topology is described herein in the exemplary context of an inverter, those skilled in the art will readily appreciate that the converter topology can readily be used in power rectifiers, for example, in a power rectifier between a three-phase, six-wire generator and an inverter.

With reference now to Figs. 1 and 2, motor drive system 100 includes a controller 124 operatively connected to inverter 102, and in turn, each H-bridge 114, for directing each H-bridge 114 to diagonally switch between three available switching states. A common mode voltage across an AC output 126 of each H-bridge 114 and at each respective phase 112, described below, at each switching state, is zero. The three available switching states include a first state, a second state and an off state. Controller 124 is configured to direct each H-bridge 114 to switch from the off state to the first state, from the first state to the off state, from the off state to the second state, and/or from the second state to the off state. Each state is described in more detail below with respect to Fig. 2 and Table 1.

As shown in Fig. 2, inverter 102 includes three H-bridges 114 to form a six-leg inverter. Each H-bridge 114 includes a first set 116 of transistors 120a and 120b electrically connected in series and a second set 118 of transistors 120c and 120d electrically connected in series. Second set 118 of transistors 120 is electrically connected in parallel with first set 116 of transistors 120. Open winding motor 104 is a three-phase open winding motor and includes three isolated AC phase windings 112. Each of the first set 116 of transistors 120a and 120b and the second set 118 of transistors 120c and 120d include a respective AC link terminal 122. Both AC link terminals 122 of a respective H-bridge 114 are electrically connected to a respective isolated AC phase winding 112 of three-phase open winding motor 104.

By eliminating common-mode voltage on a per-phase basis there will be no common mode voltage present on each AC output 126 of the H-bridges 114. Consequently, a long interconnecting bundle of six wires may be run between inverter 102 and motor 104 without radiating or conducting EMI, due to switching of inverter 102. Those skilled in the art will readily appreciate that this reduces the overall weight of motor drive system 100, as compared with traditional motor drive systems, because no common-mode voltage filter is required on AC output 126 of the H-bridges 114. Traditional elimination schemes might have a net zero common mode voltage across the entire inverter. However, due to unipolar switching, common mode voltage is not zero across each H-bridge, causing pulses of common mode voltage across the AC output of the inverter during "dead time" or "blanking time" states and ultimately necessitating a common mode voltage filter on the AC output side of the inverter.

With continued reference to Fig. 2, first set 116 of transistors 120 includes respective first and second transistors 120a and 120b, respectively. Second set 118 of transistors 120 includes respective first and second transistors 120c and 120d, respectively. In a first state of the three available switching states first transistor 120a in the first set 116 of transistors 120 is switched on, second transistor 120b in the first set 116 of transistors 120 is switched off, first transistor 120c in second set 118 of transistors 120 is switched off, and second transistor 120d in second set 118 of transistors 120 is switched on. In a second state of the three available switching states first transistor 120a in first set 116 of transistors 120 is switched off, second transistor 120b in first set 116 of transistors 120 is switched on, first transistor 120c in second set 118 of transistors 120 is switched on, and second transistor 120d in second set 118 of transistors 120 is switched off. In an off state of the three available switching states first and second transistors, 120a and 120b, respectively, in first set 116 of transistors 120 is switched off, and first and second transistors, 120c and 120d in second set 118 of transistors 120 is switched off. An example of this is shown below in Table 1.

**Table 1**

| State No. | 120a | 120b | 120c | 120d | Differential Mode Voltage ($V1 - V2$) | Common Mode Voltage $\left(\frac{V1+V2}{2}\right)$ |
|---|---|---|---|---|---|---|
| 1 | ON | OFF | OFF | ON | + VDC | 0 |
| 2 | OFF | ON | ON | OFF | -VDC | 0 |
| Off | OFF | OFF | OFF | OFF | +VDC for I > 0<br>-VDC for I < 0 | 0 |

Those skilled in the art will readily appreciate that six-leg inverter 102 in conjunction with three-phase open winding motor 104 reduces weight as compared with traditional inverters and motors. For example, given a particular amplitude of DC link voltage and assuming no space vector modulation or triplen voltage harmonic injection, six-leg inverter 102 can provide twice the per-phase voltage achievable in traditional inverters. Thus, for a given motor power requirement, each of the six wires interconnecting inverter 102 and motor 104 will only carry approximately one half of the current required by each of the three wires in a traditional inverter and motor system. Consequently, the total wire weight will remain approximately constant as compared to a three-wire interconnection with the same current density. Thus, the total weight of inverter 102 and motor 104 is reduced compared with traditional inverters and motors by virtue of reduced filter weight and without appreciable penalty due to changes in the motor or interconnecting wires.

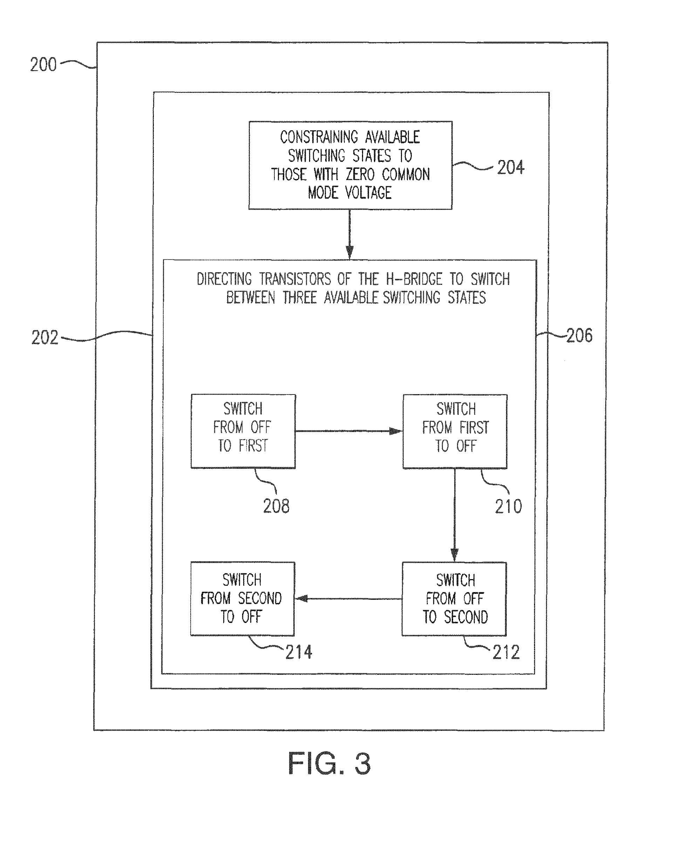

Now with reference to Fig. 3, a method for reducing electromagnetic interference (EMI) in pulse-width modulation inverters 200 includes operation 202. Operation 202 includes diagonally switching transistors, e.g. transistors 120, of an H-bridge, e.g. H-bridge 114. Diagonally switching the transistors of the H-bridge, operation 202, includes operation 204. Operation 204 includes constraining available switching states of the H-bridge to only include the switching states with zero common-mode voltage such that the common-mode voltage on an AC output, e.g. AC output 126, of the H-bridge 114 is zero.

With continued reference to Fig. 3, diagonally switching the transistors of the H-bridge, operation 202, includes operation 206. Operation 206 includes directing the transistors of the H-bridge with a controller to switch between three available switching states, as described above. Directing the H-bridge with the controller to switch between three available switching states, operation 206, includes at least one of operations 208, 210, 212 and 214. Operation 208 includes directing the transistors to switch from the off state to the first state. Operation 210 includes directing the transistors to switch from the first state to the off state. Operation 212 includes directing the transistors to switch from the off state to the second state. And, operation 214 includes directing the transistors to switch from the second state to the off state.

The methods and systems of the present invention, as described above and shown in the accompanying drawings, provide for a motor drive system with superior properties including low weight. While the apparatus and methods of the subject invention have been shown and described with reference to preferred embodiments, those skilled in the art will readily appreciate that changes and/or modification may be made thereto without departing from the scope of the subject invention.

**Claims**

1. An electrical system (100) comprising:

   a converter including an H-bridge (114), wherein the H-bridge (114) includes:

   a first set of transistors (116) electrically connected in series; and
   a second set of transistors (118) electrically connected in series, wherein the second set of transistors (118) is electrically connected in parallel with the first set of transistors (116), wherein the H-bridge (114) defines three available switching states such that a common mode voltage across the H-bridge (114) at each switching state is zero.

2. An electrical system (100) as recited in claim 1, wherein each of the first set of transistors (116) and the second set of transistors (118) include respective first and second transistors.

3. An electrical system (100) as recited in claim 1, wherein in a first state of the three available switching states a first transistor in the first set of transistors (116) is switched on, a second transistor in the first set of transistors (116) is switched off, a first transistor in the second set of transistors (118) is switched off, and a second transistor in the second set of transistors (118) is switched on.

4. An electrical system (100) as recited in claim 1, wherein in a second state of the three available switching states a first transistor in the first set of transistors (116) is switched off, a second transistor in the first set of transistors (116) is switched on, a first transistor in the second set of transistors (118) is switched on, and a second transistor in the second set of transistors (118) is switched off.

5. An electrical system (100) as recited in claim 1, wherein in an off state of the three available switching states a first and a second transistor in the first set of transistors (116) are switched off, and a first and a second transistor in the second set of transistors (118) are switched off.

6. An electrical system (100) as recited in claim 1, further comprising a controller (124) operatively connected to an inverter (102) for directing the H-bridge (114) to switch between the three available switching states.

7. An electrical system (100) as recited in claim 6, wherein in a first state of the three available switching states a first transistor in the first set of transistors (116) is switched on, a second transistor in the first set of transistors (116) is switched off, a first transistor in the second set of transistors (118) is switched off, and a second transistor in the second set of transistors (118) is switched on, in a second state of the three available switching states the first transistor in the first set of transistors (116) is switched off, the second transistor in the first set of transistors (116) is switched on, the first transistor in the second set of transistors (118) is switched on, and the second transistor in the second set of transistors (118) is switched off, and in an off state of the three available switching states the first and the second transistors in the first set of transistors (116) are switched off, and the first and the second transistors in the second set of transistors (118) are switched off, and wherein the controller (124) is configured to direct the H-bridge (114) to switch from the off state to the first state, from the first state to the off state, from the off state to the second state, and/or from the second state to the off state.

8. An electrical system (100) as recited in claim 1, further comprising an open winding motor including an isolated AC phase winding, wherein each of the first set of transistors (116) and the second set of transistors (118) include a respective AC link terminal, wherein both AC link terminals are electrically connected to the isolated AC phase winding of the open winding motor.

9. An electrical system (100) as recited in claim 8, wherein the converter includes two additional H-bridges (114) to form a six-leg converter, wherein the open winding motor is a three-phase open winding motor, wherein each phase of the open winding motor corresponds to one of the respective H-bridges (114) through their respective AC link terminals.

10. An electrical system (100) as recited in claim 1, further comprising:

    a generator (106);
    a rectifier (108) electrically connected to the generator (106) for converting alternating current energy from the generator to direct current energy, wherein the converter is electrically connected to the rectifier (108) through a two-wire DC bus for converting direct current energy from the rectifier to alternating current energy.

11. A method for reducing electromagnetic interference (EMI) in pulse-width modulation converters, the method comprising:

diagonally switching transistors of an H-bridge (114), wherein diagonally switching the transistors of the H-bridge (114) includes constraining available switching states of the H-bridge (114) to only include the switching states with zero common-mode voltage such that common-mode voltage on an AC output side of the H-bridge (114) is zero.

12. A method as recited in claim 11, wherein the AC output side of the H-bridge (114) includes two AC terminals, wherein each AC terminal is electrically connected to a single phase of a three-phase open winding motor.

13. A method as recited in claim 11, wherein diagonally switching the transistors of the H-bridge includes directing the transistors of the H-bridge (114) with a controller to switch between three available switching states, wherein the controller is operatively connected to the H-bridge.

14. A method as recited in claim 13, wherein the H-bridge (114) includes a first set of transistors (116) electrically connected in series and a second set of transistors (118) electrically connected in series, wherein the second set of transistors (118) is electrically connected in parallel with the first set of transistors (116), and wherein the three available switching states include a first state, a second state and an off state, wherein in the off state all the transistors of the H-bridge (114) are switched off, wherein in the first state, a first transistor in the first set of transistors (116) is switched on, a second transistor in the first set of transistors (116) is switched off, a first transistor in the second set of transistors (118) is switched off, and a second transistor in the second set of transistors (118) is switched on, and wherein in the second state the first transistor in the first set of transistors (116) is switched off, the second transistor in the first set of transistors (116) is switched on, the first transistor in the second set of transistors (118) is switched on, and the second transistor in the second set of transistors (118) is switched off.

15. A method as recited in claim 14, wherein directing the transistors of the H-bridge (114) with the controller to switch between three available switching states includes directing the transistors to switch from the off state to the first state, from the first state to the off state, from the off state to the second state, and/or from the second state to the off state.

FIG. 1

FIG. 2

FIG. 3

Europäisches
Patentamt

European
Patent Office

Office européen
des brevets

# EUROPEAN SEARCH REPORT

Application Number

EP 15 17 3090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ned Mohan ET AL: "Single-Phase Inverters" In: "Power Electronics: converters, applications and designs 2nd Edition", 31 December 1995 (1995-12-31), John Wiley & Sons Inc., XP055156065, ISBN: 978-0-47-158408-7 pages 211-217, * figure 8.11 * * 8-3-2-1 PWM with Bipolar Voltage Switching; page 212 - page 215 * & Ned Mohan ET AL: "Effects of blanking time on voltage in PWM inverters" In: "Power electronics : converters, applications, and design", 31 December 1995 (1995-12-31), JOHN WILEY & SONS, INC., NEW YORK, CHICHESTER, BRISBANE, TORONTO, SINGAPORE, XP055231125, ISBN: 978-0-471-58408-7 pages 236-239, * page 237 - page 238 * ----- | 1-7,11, 13-15 | INV. H02M1/12 H02M7/5387 ADD. H02P27/06 H02M1/44 |
| X | US 2012/163044 A1 (MAYOR MIGUEL ALVAR [ES] ET AL) 28 June 2012 (2012-06-28) * figure 2 * * paragraphs [0030] - [0040] * ----- -/-- | 1-15 | TECHNICAL FIELDS SEARCHED (IPC) H02M H02P |

The present search report has been drawn up for all claims

| Place of search | Date of completion of the search | Examiner |
|---|---|---|
| The Hague | 1 December 2015 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**Application Number**

EP 15 17 3090

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLAABJERG F ET AL: "Power electronics - key technology for renewable energy systems", POWER ELECTRONICS, DRIVE SYSTEMS AND TECHNOLOGIES CONFERENCE (PEDSTC), 2011 2ND, IEEE, 16 February 2011 (2011-02-16), pages 445-466, XP031936654, DOI: 10.1109/PEDSTC.2011.5742462 ISBN: 978-1-61284-422-0 * figures 14, 34, 36 * * Sections IV B 2), VII A, B * | 1-15 | |
| A | GONZALEZ R ET AL: "Transformerless Inverter for Single-Phase Photovoltaic Systems", IEEE TRANSACTIONS ON POWER ELECTRONICS, INSTITUTE OF ELECTRICAL AND ELECTRONICS ENGINEERS, USA, vol. 22, no. 2, 1 March 2007 (2007-03-01), pages 693-697, XP011184174, ISSN: 0885-8993, DOI: 10.1109/TPEL.2007.892120 * Section III; figures 2,3,4 * | 1-15 | TECHNICAL FIELDS SEARCHED (IPC) |

The present search report has been drawn up for all claims

| Place of search | Date of completion of the search | Examiner |
|---|---|---|
| The Hague | 1 December 2015 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 17 3090

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2015

| Patent document cited in search report | Publication date | Patent family member(s) | Publication date |
|---|---|---|---|
| US 2012163044 A1 | 28-06-2012 | CN 102570491 A<br>EP 2495862 A2<br>ES 2403551 A2<br>US 2012163044 A1 | 11-07-2012<br>05-09-2012<br>20-05-2013<br>28-06-2012 |

EPO FORM P0459

For more details about this annex : see Official Journal of the European Patent Office, No. 12/82